# EUROPEAN PATENT APPLICATION

(11) **EP 4 098 342 A1**
(43) Date of publication of application: **07.12.2022**
(21) Application number: 21747488.1
(22) Date of filing: 27.01.2021
(51) Int. Cl.: B01D 21/01, C02F 1/00, C02F 1/52

(54) **WATER TREATMENT AGENT**

(30) Priority: 31.01.2020 JP 2020014855; 17.11.2020 JP 2020190649
(71) Applicant: Kao Corporation, Chuo-ku Tokyo 103-8210 (JP)
(72) Inventor: KOJIMA Hironori, Wakayama-shi, Wakayama 640-8580 (JP); FUKUDA Masaya, Wakayama-shi, Wakayama 640-8580 (JP); ISHIZUKA Hitoshi, Tokyo 103-8210 (JP)
(74) Representative: Hoffmann Eitle
(86) International application number: PCT/JP2021/002738
(87) International publication number: WO 2021/153580

(57) **Abstract**

The present invention is a water treatment agent containing (a) a polymeric flocculating agent, (b) an inorganic flocculating agent and (c) a surfactant, wherein the water treatment agent contains (c) in an amount of more than 50 parts by mass and 10,000 parts by mass or less relative to 1,000 parts by mass of (b).

## Description

### Field of the Invention

The present invention relates to a water treatment agent and a method for purifying water.

### Background of the Invention

Securing safe water is one of the most important activities in general life. Developed countries have well-developed infrastructure relating to water utilization. Under present circumstances, however, there are still many areas on the earth that do not have access to sufficient water, and people living in such areas are forced to work very hard to secure water. Therefore, there is a strong need for technologies that can easily purify sludge or other polluting components existing in river water, lake water, groundwater, rainwater or the like.

JP-A 2001-96279 discloses a treatment agent for surfactant-containing wastewater comprising, a formaldehyde condensate obtained by condensing a dihydroxydiphenyl sulfone, an aromatic compound having a sulfonic acid group and formaldehyde.

JP-A 2006-7208 discloses a method for treating wastewater that comprises resin particle (A) with a volume average particle size of 0.0005 to 500 µm, surfactant (B) and/or water-soluble polymer (C), the method comprising a step of adding inorganic flocculating agent (a), a step of adding polymeric flocculating agent (b), and a step of adding organic coagulating agent (c) as necessary.

JP-A 2007-61718 discloses a composite flocculating agent comprising a predetermined amount of clay and comprising one or more flocculating agents selected from inorganic flocculating agents and organic polymeric flocculating agents, wherein the inorganic flocculating agents comprise sodium sulfite or iron salts.

### Summary of the Invention

Recycling wastewater requires efficiently separating various polluting components from the wastewater. One possible method for this is a method of flocculating the polluting components and separating them from the water. In this method, the flocculates (also called flocs) of the polluting components are easier to remove if they are enlarged by promoting the flocculation.

The present invention provides a water treatment agent and a method for purifying water capable of promoting the flocculation of polluting components in water to be treated including the polluting components, thereby forming flocculates which are enlarged and are difficult to deflocculate and easy to separate from the water to be treated.

The present invention relates to a water treatment agent containing (a) a polymeric flocculating agent [hereinafter referred to as component (a)], (b) an inorganic flocculating agent [hereinafter referred to as component (b)] and (c) a surfactant [hereinafter referred to as component (c)], wherein the water treatment agent contains component (c) in an amount of more than 50 parts by mass and 10,000 parts by mass or less relative to 1,000 parts by mass of component (b).

Further, the present invention relates to a method for purifying water including, adding components (a), (b) and (c) to water to be treated including water and polluting components,
wherein component (c) is added such that a concentration of component (c) in the water to be treated is 100 ppm or more and 100,000 ppm or less, and
component (c) is added in an amount of more than 50 parts by mass and 10,000 parts by mass or less relative to 1,000 parts by mass of component (b).

According to the present invention, provided are a water treatment agent and a method for purifying water capable of promoting the flocculation of polluting components in water to be treated including the polluting components, thereby forming flocculates which are enlarged and are difficult to deflocculate and easy to separate from the water to be treated.

### Embodiments of the Invention

### <Water treatment agent>

In the present invention, it is inferred that component (b) flocculates polluting components such as, for example, suspended particles of soil, thereby forming flocculates, and component (a) intervenes between these flocculates to strengthen a bond between them, making their deflocculation difficult. Further, it is inferred that the presence of component (c) causes charges to repel each other, thereby moderately expanding molecular chains of component (a) to enlarge the flocculates.

Component (a) is a polymeric flocculating agent.

Component (a) has a weight average molecular weight of preferably 500,000 or more, more preferably 1,000,000 or more and further preferably 2,000,000 or more, and preferably 15,000,000 or less, more preferably 12,000,000 or less and further preferably 10,000,000 or less. The weight average molecular weight of component (a) is calculated from the intrinsic viscosity by the Mark-Houwink equation when component (a) is a polyalkylene oxide such as polyethylene oxide or the like, and is calculated from gel permeation chromatography (GPC) under the conditions described later in other cases.

Examples of the polymeric flocculating agent of component (a) include a polymeric flocculating agent composed of a water-soluble (co)polymer including water-soluble monomer (a1) as a constitutional unit. Water-soluble monomer (a1) includes the following nonionic monomer (a11), cationic monomer (a12), anionic monomer (a13) and mixtures of two or more of them. The water-soluble monomers are preferably water-soluble unsaturated monomers. Water-insoluble unsaturated monomer (x) and cross-linkable monomer (y) may be used as necessary in combination with water-soluble monomer (a1) as monomers constituting the water-soluble (co)polymer in a range that they do not impair effects of the present invention.

As used herein, a water-soluble monomer or a water-soluble (co)polymer means a monomer or a (co)polymer with a solubility to water (20°C) of 1 g or more per 100 g of water, and a water-insoluble monomer means a monomer with a solubility to water (20°C) of less than 1 g per 100 g of water.

Note that number average molecular weights and weight average molecular weights measured by a gel permeation chromatography (GPC) method are hereinafter abbreviated respectively as GMn and GMw, which are determined under the following GPC measurement conditions:
<GPC measurement conditions>
Instrument: HLC-802A, manufactured by Tosoh Corporation
Column: TSKgel GMH6 (two columns)
Measurement temperature: 40°C
Sample solution: 0.5 mass% tetrahydrofuran solution
Solution injection volume: 200 µl
Detection instrument: refractive index detector
Standard: polyethylene glycol

### (a11) Nonionic monomer

Examples include the following and mixtures of them.

### (a11-1) (Meth)acrylates

Those with a number of carbons (hereinafter abbreviated as C) of 4 or more and a number average molecular weight [measured by a gel permeation chromatography (GPC) method and hereinafter abbreviated as GMn] of 5,000 or less. For example, hydroxy group-containing (meth)acrylates [e.g., hydroxy ethyl-, diethylene glycol mono-, polyethylene glycol (degree of polymerization of 3 or more and 50 or less) mono- and polyglycerol (degree of polymerization of 1 or more and 10 or less) mono(meth)acrylates], and alkyl (alkyl group of C1 or more and C2 or less) esters of acrylic acid (C4 or more and C5 or less, e.g., methyl acrylate and ethyl acrylate).

### (a11-2) (Meth)acrylamide and derivatives thereof

Those of C3 or more and C30 or less. For example, (meth)acrylamide, N-alkyl (C1 or more and C3 or less) (meth)acrylamides [N-methyl and isopropyl (meth)acrylamides or the like], and N-alkylol (meth)acrylamides [N-methylol (meth)acrylamide or the like].

### (a11-3) Nitrogen atom-containing ethylenic unsaturated compounds other than the above

Those of C3 or more and C30 or less. For example, acrylonitrile, N-vinylformamide, N-vinyl-2-pyrrolidone, N-vinylsuccinimide and 2-cyanoethyl (meth)acrylate.

### (a11-4) Alkylene oxides

Ethylene oxide and propylene oxide.

### (a12) Cationic monomer

Examples include those listed below, salts [e.g., salts of inorganic acids (hydrochloric acid, sulfuric acid, phosphoric acid, nitric acid and the like), methyl chloride salts, dimethyl sulfate salts, benzyl chloride salts and the like] of those, and mixtures thereof.

### (a12-1) Nitrogen atom-containing (meth)acrylates

Those of C5 or more and C30 or less. For example, aminoalkyl (C2 or more and C3 or less) (meth)acrylates, N,N-dialkyl (C1 or more and C2 or less) aminoalkyl (C2 or more and C3 or less) (meth)acrylates [N,N-dimethylaminoethyl (meth)acrylate, N,N-dimethylaminopropyl (meth)acrylate, N,N-diethylaminoethyl (meth)acrylate, N,N-diethylaminopropyl (meth)acrylate or the like], and heterocyclic (meth)acrylates [N-morpholinoethyl (meth)acrylate or the like].

### (a12-2) Nitrogen atom-containing (meth)acrylamide derivatives

Those of C5 or more and C30 or less. For example, N,N-dialkyl (C1 or more and C2 or less) aminoalkyl (C2 or more and C3 or less) (meth)acrylamides [N,N-dimethylaminoethyl (meth)acrylamide or the like].

### (a12-3) Ethylenic unsaturated compounds having an amino group

Those of C5 or more and C30 or less. For example, vinylamine, (meth)allylamine or the like.

### (a12-4) Compounds having an amine imide group

Those of C5 or more and C30 or less. For example, 1,1,1-trimethylamine (meth)acrylimide, 1,1-dimethyl-1-ethylamine (meth)acrylimide or the like.

### (a12-5) Nitrogen atom-containing vinyl monomers other than the above

Those of C5 or more and C30 or less.

### (a13) Anionic monomer

Examples include the acids listed below, salts [salts of alkali metals (lithium, sodium, potassium or the like, the same applies hereinafter), salts of alkaline earth metals (magnesium, calcium or the like, the same applies hereinafter), ammonium salts, amine (C1 or more and C20 or less) salts and the like] of those, and mixtures thereof.

### (a13-1) Unsaturated carboxylic acids

Those of C3 or more and C30 or less. For example, (meth)acrylic acid, (the anhydride of) maleic acid, fumaric acid, (the anhydride of) itaconic acid and allyl acetic acid.

### (a13-2) Unsaturated sulfonic acids

Aliphatic unsaturated sulfonic acids of C2 or more and C20 or less (vinylsulfonic acid or the like), sulfonic acid group-containing (meth)acrylates [sulfoalkyl (C2 or more and C20 or less) (meth)acrylates [2-(meth)acryloyloxyethanesulfonic acid, 2-(meth)acryloyloxypropanesulfonic acid, 3-(meth)acryloyloxypropanesulfonic acid, 2-(meth)acryloyloxybutanesulfonic acid, 4-(meth)acryloyloxybutanesulfonic acid, 2-(meth)acryloyloxy-2,2-dimethylethanesulfonic acid or the like]], sulfonic acid group-containing (meth)acrylamides [2-(meth)acryloylaminoethanesulfonic acid, 2- and 3-(meth)acryloylaminopropanesulfonic acids, 2- and 4-(meth)acryloylaminobutanesulfonic acids, 2-(meth)acryloylamino-2,2-dimethylethanesulfonic acid or the like], alkyl (C1 or more and C20 or less) (meth)allylsulfosuccinate esters [methyl (meth)allylsulfosuccinate ester or the like] and others.

### (a13-3) (Meth)acryloyl polyoxyalkylene (C1 or more and C6 or less) sulfate esters

(Meth)acryloyl polyoxyethylene (degree of polymerization of 2 or more and 50 or less) sulfate ester or the like.

Examples of water-insoluble unsaturated monomer (x) that may be used in combination with (a) as necessary include the following (x1) to (x5) and mixtures of them.

### (x1) (Meth)acrylates of C6 or more and C23 or less

Aliphatic or alicyclic alcohol (C3 or more and C20 or less) (meth)acrylates [propyl, butyl, lauryl, octadecyl and cyclohexyl (meth)acrylates or the like], and epoxy group (C4 or more and C20 or less)-containing (meth)acrylates [glycidyl (meth)acrylate or the like].

### (x2) Unsaturated carboxylate monoesters of [mono-alkoxy (C1 or more and C20 or less)- or mono-cycloalkoxy (C3 or more and C12 or less)] polypropylene glycol (hereinafter abbreviated as PPG) (degree of polymerization of 2 or more and 50 or less)

(Meth)acrylate esters of propylene oxide (hereinafter abbreviated as PO) adducts of mono-ols (C1 or more and C20 or less) [ω-methoxy PPG mono(meth)acrylate, ω-ethoxy PPG mono(meth)acrylate, ω-propoxy PPG mono(meth)acrylate, ω-butoxy PPG mono(meth)acrylate, ω-cyclohexyl PPG mono(meth)acrylate or the like], (meth)acrylate esters of PO adducts of diols (C2 or more and C20 or less) [ω-hydroxyethyl (poly)oxypropylene mono(meth)acrylate or the like] and others.

### (x3) Unsaturated hydrocarbons of C2 or more and C30 or less

Ethylene, nonene or the like.

### (x4) Carboxylic acid (C2 or more and C30 or less) esters of unsaturated alcohols [C2 or more and C4 or less, e.g., vinyl alcohol and (meth)allyl alcohol] (vinyl acetate or the like)

### (x5) Halogen-containing monomers (C2 or more and C30 or less, e.g., vinyl chloride)

Further, examples of cross-linkable monomer (y) include the following (y1) to (y5), salts of those [e.g., salts of inorganic acids (hydrochloric acid, hydrobromic acid, hydroiodic acid, sulfuric acid, sulfurous acid, phosphoric acid, nitric acid and the like), methyl chloride salts, dimethyl sulfate salts and the like for the basic monomers, and alkali metal salts, alkaline earth metal salts and amine (C1 or more and C20 or less, e.g., methylamine, ethylamine and cyclohexylamine) salts for the acidic monomers], and mixtures thereof.

### (y1) Bispoly(2 or more and 4 or less)(meth)acrylamides

Those of C5 or more and C30 or less. For example, N,N'-methylenebisacrylamide.

### (y2) Poly(2 or more and 4 or less)(meth)acrylates

Those of C8 or more and C30 or less. For example, ethylene glycol di(meth)acrylate and pentaerythritol [poly(2 or more and 4 or less)](meth)acrylate.

### (y3) Monomers containing (2 or more and 20 or less) vinyl groups

Those of C4 or more and with a GMn of 6,000 or less. For example, divinylamine, poly(2 or more and 20 or less)vinylamines of polyvalent (2 or more and 5 or less) amines [C2 or more and GMn of 3,000 or less, e.g., ethylenediamine and polyethyleneimine (C4 or more and GMn of 3,000 or less)], divinyl ether, polyhydric alcohols [C2 or more and GMn of 3,000 or less, e.g., alkylene (C2 or more and C6 or less) glycols [ethylene glycol, propylene glycol and 1,6-hexanediol (hereinafter abbreviated as EG, PG and HD, respectively) and the like], polyoxyalkylenes [GMn of 2,000 or more and 3,000 or less, e.g., polyethylene glycol (hereinafter abbreviated as PEG) (molecular weight of 106 or more and GMn of 3,000 or less), PPG (molecular weight of 134 or more and GMn of 3,000 or less) and polyoxyethylene (molecular weight of 106 or more and GMn of 3,000 or less)/polyoxypropylene (molecular weight of 134 or more and GMn of 3,000 or less) block copolymers], poly(2 or more and 20 or less)vinyl ethers of trimethylolethane, trimethylolpropane, (poly)(2 or more and 50 or less)glycerin, pentaerythritol and sorbitol (hereinafter abbreviated as TME, TMP, GR, PE and SO, respectively)] and the like.

### (y4) Monomers containing (2 or more and 20 or less) allyl groups

Those of C6 or more and with a GMn of 3,000 or less. For example, di(meth)allylamine, N-alkyl (C1 or more and C20 or less) di(meth)allylamines, poly(2 or more and 20 or less)(meth)allylamines of (the above) polyvalent amines, di(meth)allyl ether, poly(2 or more and 20 or less)(meth)allyl ethers of (the above) polyhydric alcohols, poly(2 or more and 20 or less)(meth)allyloxyalkanes (C1 or more and C20 or less) (tetraallyloxyethane or the like).

### (y5) Epoxy group-containing monomers

Those of C8 or more and with a GMn of 6,000 or less. For example, EG diglycidyl ether, PEG diglycidyl ether and GR triglycidyl ether.

Examples of component (a) include a polymeric flocculating agent composed of a water-soluble (co)polymer including one or more water-soluble monomers selected from the above nonionic monomer (a11) and anionic monomer (a13) as constitutional units.

Examples of component (a) include a polymeric flocculating agent composed of one or more water-soluble (co)polymers selected from water-soluble (co)polymers including the above nonionic monomer (a11) as a constitutional unit and water-soluble (co)polymers including the above anionic monomer (a13) as a constitutional unit.

Examples of the water-soluble (co)polymers including the above nonionic monomer (a11) as a constitutional unit include a water-soluble (co)polymer including as constitutional units one or more nonionic monomers selected from (a11-2) (meth)acrylamide and derivatives thereof and (a11-4) alkylene oxides, and further, one or more nonionic monomers selected from (a11-4) alkylene oxides.

Examples of the water-soluble (co)polymers including anionic monomer (a13) as a constitutional unit include a water-soluble (co)polymer including any of (a13-1) unsaturated carboxylic acids as a constitutional unit.

Component (a) is preferably one or more polymeric flocculating agents selected from nonionic polymeric flocculating agents and anionic polymeric flocculating agents. Component (a) is more preferably a nonionic polymeric flocculating agent.

Examples of component (a) include one or more polymeric flocculating agents selected from polyalkylene oxides, polyacrylamide and polyacrylic acid or salts thereof.

Component (a) is preferably a polyalkylene oxide and more preferably polyethylene oxide.

The polyalkylene oxide preferably includes ethylene oxide as a polymerization unit.

The polyalkylene oxide is preferably a polyethylene oxide. The polyethylene oxide is preferably a polyalkylene oxide with a weight average molecular weight of 500,000 or more.

Component (a) is preferably a polymeric flocculating agent having spinnability.

In the present disclosure, "spinnability" refers to the so-called "thread-pulling" property, in which stretching characteristics of objects are developed, and for example, the "thread-pulling of natto" or the like is an example of such a property. In one or more embodiments, spinnability refers to the property of a liquid composition forming a continuous thread-like structure without breaking to form droplets when slowly dropped or stretched with one end thereof held, and for example, the "thread-pulling of animal or plant mucus" or the like is an example thereof. Spinnability is one of the elastic relaxation phenomena of liquid compositions and is generally known to be a physical property completely independent of surface tension or viscosity.

The presence or absence of spinnability of component (a) can be determined by the method below. For example, an aqueous solution obtained by dissolving a polymeric flocculating agent in purified water to a predetermined concentration (e.g., 10 mass%) is used for the determination by a method in conformance with the following [spinnability determination method], and if the aqueous solution has spinnability, the polymeric flocculating agent can be judged as having spinnability.

### [Spinnability determination method]

An aqueous solution that pulls a thread when quietly dropped from a pasteur pipette with a tip inner diameter of 1 mm (glass, e.g., ASAHITECHNO GLASS, IK-PAS-5P) can be considered as an aqueous solution that exhibits spinnability in the present disclosure.

Component (a) is preferably a polymeric flocculating agent which exhibits spinnability in the form of an aqueous solution with a concentration of 30 g/L or less, more preferably a polymeric flocculating agent which exhibits spinnability in the form of an aqueous solution with a concentration of 10 g/L or less, and further preferably a polymeric flocculating agent which exhibits spinnability in the form of an aqueous solution with a concentration of 5 g/L or less.

Component (b) is an inorganic flocculating agent.

Examples of component (b) include one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.

Component (b) is preferably one or more inorganic flocculating agents selected from aluminum sulfate, polyaluminum chloride, iron(II) sulfate, iron(III) sulfate and polyferric sulfate.

Component (c) is a surfactant. Component (c) may be a surfactant with a molecular weight of less than 500,000. In the present invention, the use of the surfactant of component (c) together with components (a) and (b) and the presence of component (c) make it easy to form flocculates which are enlarged and difficult to deflocculate.

Examples of the surfactant include one or more surfactants selected from anionic surfactants, nonionic surfactants, cationic surfactants, amphoteric surfactants and water-soluble polymers with a molecular weight of less than 500,000.

Component (c) is preferably an anionic surfactant. The water treatment agent of the present invention preferably contains an anionic surfactant as component (c). Examples of the anionic surfactant include an anionic surfactant with a molecular weight of 500 or more and having an aromatic ring, an anionic surfactant with a molecular weight of less than 500 and having an aromatic ring, and an anionic surfactant having no aromatic rings.

Examples of the anionic surfactant include an anionic surfactant having a hydrocarbon group with 8 or more and 24 or less carbons and a sulfonic acid group or a sulfate group. The sulfonic acid group or sulfate group may form a salt. Examples of the anionic surfactant having a sulfate group include an alkyl or alkenyl sulfate and a polyoxyalkylene alkyl or alkenyl ether sulfate. Examples of the anionic surfactant having a sulfonic acid group which may form a salt include an alkylbenzene sulfonate. Other examples of the anionic surfactant include a fatty acid with 12 or more and 24 or less carbons or a salt thereof, polyacrylic acid or a salt thereof, further a polyacrylic acid with a weight average molecular weight of less than 500,000 or a salt thereof, and others.

Examples of the nonionic surfactants include polyoxyalkylene alkyl ether nonionic surfactants.

Examples of the cationic surfactants include quaternary ammonium surfactants or tertiary amine surfactants.

Examples of the amphoteric surfactants are not particularly limited to, but include, for example, N-alkyl-N,N-dimethylamine oxides having an alkyl group with 8 or more and preferably 10 or more and 18 or less and preferably 16 or less carbons, N-alkyl carbonyl aminopropyl-N,N-dimethylamine oxides having an alkyl group with a number of carbons falling within the above range, N-alkyl-N,N-dimethylaminoacetic acid betaines having an alkyl group with a number of carbons falling within the above range, N-alkyl carbonyl aminopropyl-N,N-dimethylaminoacetic acid betaines having an alkyl group with a number of carbons falling within the above range, N-alkyl-N,N-dimethyl-N-(2-hydroxysulfopropyl)ammonium sulfobetaines having an alkyl group with a number of carbons falling within the above range and the like.

Component (c) may be a compound selected from compounds with a molecular weight of 500 or more and having an aromatic ring [hereinafter also referred to as component (c1)]. Examples of component (c1) include, for example, anionic surfactants with a molecular weight of 500 or more and having an aromatic ring. The water treatment agent obtained by using component (c1) as component (c) is capable of not only promoting the flocculation of polluting components in water to be treated including the polluting components, thereby forming flocculates which are enlarged and difficult to deflocculate and easy to separate from the water to be treated, but also fully separating the polluting components as flocculates from the water to be treated even if treatment is large in scale, as well as suppressing excessive foaming during water treatment. If component (c1) is used as component (c), for example, performance as per design is more likely to be exhibited regardless of the scale of apparatuses or facilities used for water treatment. Further, if component (c1) is used as component (c), for example, foaming of foamable polluting components such as surfactants or the like included in wastewater under treatment can be suppressed, which is more desirable if the water after treatment is recycled as domestic water or the like.

As mentioned earlier, in the present invention, it is inferred that component (b) flocculates polluting components such as, for example, suspended particles of soil, thereby forming flocculates, and component (a) intervenes between these flocculates to strengthen a bond between them, making their deflocculation difficult. It is inferred that component (c1) causes charges to repel each other, thereby moderately expanding molecular chains of component (a) to enlarge the flocculates. Further, it is inferred that component (c1) of the present invention is excellent in the ability to expand molecular chains of component (a), allowing component (a) to fully exhibit its performance even if treatment is large in scale. The water treatment agent of the present invention using component (c1) as (c) is excellent in the ability to flocculate polluting components such as surfactants or the like, and is also highly effective at removing them, so that water after treatment has less foamability. The use of such a water treatment agent of the present invention enlarges flocculates of polluting components, thereby facilitating the removal of the polluting components (flocculates) from treated water. For example, as described in Examples later, the flocculates can be removed from treated water by directly holding by hand. Further, the flocculates can also be separated, for example, by a simple procedure such as scooping a supernatant liquid or the like. Thus, the water treatment agent of the present invention enables very simple water purification.

As one aspect of the present invention, provided is a water treatment agent containing (a) a polymeric flocculating agent, (b) an inorganic flocculating agent and (c) a surfactant, wherein (c) is (c1) a compound with a molecular weight of 500 or more and having an aromatic ring, and the water treatment agent contains (c) in an amount of more than 50 parts by mass and 10,000 parts by mass or less relative to 1,000 parts by mass of (b).

Examples of component (c1) include a compound with a molecular weight of 500 or more and having an aromatic ring.

Component (c1) has a molecular weight of preferably 1,000 or more, more preferably 1,500 or more and further preferably 2,000 or more, and preferably 100,000 or less, more preferably 50,000 or less and further preferably 20,000 or less from the viewpoints of foaming of supernatant after treatment and the maximum amount of water that can be treated. Here, this molecular weight may be weight average molecular weight when component (c1) is a polymer. In that case, a method for measuring the weight average molecular weight is a GPC (gel permeation chromatography) method under the same conditions for component (a).

Component (c1) is preferably an anionic compound. Examples of the anionic compound include a compound having an anionic group such as a sulfonic acid group, a carboxylic acid group, a sulfate group or the like. The anionic groups may form salts.

Component (c1) is preferably a water-soluble compound. Component (c1) is considered to be water-soluble when having a solubility to water (20°C) of 1 g or more per 100 g of water.

Component (c), and further, component (c1), may be compounds which alone exhibit no flocculation performance. Here, exhibiting no flocculation performance may mean that no flocculates are formed when a sample is added in a concentration of 800 ppm to ion exchange water whose temperature is adjusted to 30°C, and with a cylindrical stirrer having a diameter of 11 mm and a length of 43 mm placed therein, stirred on a magnetic stirrer (NISSIN stirrer SW-M120) for 5 minutes with the scale set to 4.

Examples of the aromatic ring of component (c1) include a benzene ring, a naphthalene ring, an anthracene ring, a triazine ring, a pyrrole ring and others.

Examples of component (c1) include a compound having 1 or more, preferably 5 or more and more preferably 10 or more, and further, preferably 1,000 or less, further 500 or less and further 200 or less aromatic rings.

Examples of component (c1) include a naphthalene sulfonate formaldehyde condensate or a salt thereof, an alkyl diphenyl ether disulfonate or a salt thereof, an alkylbenzene sulfonate or a salt thereof, and the like. They all have a molecular weight of 500 or more. Examples of the salts include salts of alkali metals such as sodium, potassium or the like, salts of alkaline earth metals such as calcium, magnesium or the like, and alkali metal salts are preferable.

Examples of the surfactant of component (c) include one or more surfactants selected from anionic surfactants with a molecular weight of 500 or more and having an aromatic ring, anionic surfactants with a molecular weight of less than 500 and having an aromatic ring, anionic surfactants having no aromatic rings, nonionic surfactants, cationic surfactants and amphoteric surfactants.

One aspect of the present invention is
a water treatment agent containing (a) a polymeric flocculating agent, (b) an inorganic flocculating agent and (c) a surfactant,
wherein (c) is one or more surfactants selected from anionic surfactants with a molecular weight of 500 or more and having an aromatic ring, anionic surfactants with a molecular weight of less than 500 and having an aromatic ring, anionic surfactants having no aromatic rings, nonionic surfactants, cationic surfactants and amphoteric surfactants, and
the water treatment agent contains (c) in an amount of more than 50 parts by mass and 10,000 parts by mass or less relative to 1,000 parts by mass of (b).

The water treatment agent of the present invention can contain component (c) in an amount of, for example, 10 mass% or more, further 20 mass% or more and further 30 mass% or more, and 90 mass% or less, further 80 mass% or less and further 60 mass% or less.

The water treatment agent of the present invention contains component (c) in an amount of more than 50 parts by mass, preferably 60 parts by mass or more, more preferably 70 parts by mass or more, further preferably 100 parts by mass or more, furthermore preferably 150 parts by mass or more, furthermore preferably 200 parts by mass or more and furthermore preferably 300 parts by mass or more, and 10,000 parts by mass or less, preferably 2,000 parts by mass or less, more preferably 1,500 parts by mass or less and further preferably 1,200 parts by mass or less relative to 1,000 parts by mass of component (b) from the viewpoints of improved flocculation performance and handling.

When the water treatment agent of the present invention contains component (c1) as component (c), the water treatment agent of the present invention contains component (c1) in an amount of preferably 100 parts by mass or more, more preferably 200 parts by mass or more and further preferably 400 parts by mass or more, and preferably 3,000 parts by mass or less, more preferably 2,000 parts by mass or less and further preferably 1,500 parts by mass or less relative to 1,000 parts by mass of component (b) from the viewpoint of the maximum amount of water that can be treated.

The water treatment agent of the present invention contains component (a) in an amount of preferably 0.1 parts by mass or more, more preferably 1 part by mass or more, further preferably 2 parts by mass or more and furthermore preferably 6 parts by mass or more, and preferably 1,000 parts by mass or less, more preferably 500 parts by mass or less, further preferably 300 parts by mass or less, furthermore preferably 200 parts by mass or less and furthermore preferably 100 parts by mass or less relative to 1,000 parts by mass of component (b) from the viewpoints of improved flocculation performance and handling.

The water treatment agent of the present invention contains component (c) in an amount of preferably 5 parts by mass or more, more preferably 10 parts by mass or more, further preferably 15 parts by mass or more, more preferably 20 parts by mass or more and furthermore preferably 50 parts by mass or more, and preferably 1,000 parts by mass or less, more preferably 500 parts by mass or less, further preferably 200 parts by mass or less, furthermore preferably 150 parts by mass or less and furthermore preferably 120 parts by mass or less relative to 1 part by mass of component (a) from the viewpoints of improved flocculation performance and handling.

When the water treatment agent of the present invention contains component (c1) as component (c), the water treatment agent of the present invention contains component (c1) in an amount of preferably 10 parts by mass or more, more preferably 20 parts by mass or more and further preferably 40 parts by mass or more, and preferably 300 parts by mass or less, more preferably 200 parts by mass or less and further preferably 150 parts by mass or less relative to 1 part by mass of component (a) from the viewpoint of the maximum amount of water that can be treated.

The water treatment agent of the present invention can contain a water-soluble inorganic compound, a bleaching agent, a bactericide, an antibacterial agent, an antiseptic, a pH adjuster or other components (excluding components (a), (b) and (c)) as optional components. The pH adjuster is used to control the pH of water to be treated when the water to be treated is purified with the water treatment agent of the present invention, and examples thereof include alkali agents and acid agents. Examples of the alkali agents include caustic soda, sodium carbonate, sodium bicarbonate, sodium silicate, monoethanolamine or the like, and examples of the acid agents include inorganic acids such as sodium hydrogen sulfate or the like, organic acids such as citric acid, lactic acid or the like, and others.

The water treatment agent of the present invention may be either a powder or liquid form.

The water treatment agent of the present invention may be a multi-agent type water treatment agent composed of a combination of agents including components selected from components (a), (b) and (c), wherein components (a) and (b) are formulated in different agents. For example, the water treatment agent of the present invention may be a multi-agent type water treatment agent including a first agent containing component (a) and a second agent containing component (b). The first agent may be an agent not containing component (b). Further, the second agent may be an agent not containing component (a). The first and/or second agents can be appropriately formulated with component (c) or optional components, or an agent other than the first and second agents can be formulated with component (c) or optional components, thereby forming a multi-agent type water treatment agent including three or more agents.

The water treatment agent of the present invention can be suitably used in the method for purifying water of the present invention described below.

### <Method for purifying water>

The method for purifying water of the present invention is a method for purifying water including, adding components (a), (b) and (c) to water to be treated including water and polluting components, wherein component (c) is added such that a concentration of component (c) in the water to be treated is 100 ppm or more and 100,000 ppm or less, and component (c) is added in an amount of more than 50 parts by mass and 10,000 parts by mass or less relative to 1,000 parts by mass of component (b).

The matters mentioned in the water treatment agent of the present invention can be appropriately applied to the method for purifying water of the present invention. Specific examples, preferable examples or the like of components (a), (b) and (c) are the same as those in the water treatment agent of the present invention.

The polluting components included in the water to be treated may be formed of organic matter, inorganic matter and combinations thereof.

Examples of the polluting components include, for example, soil (which means that clay, mud or the like may be included), bacteria, heavy metals and their ions, sebum, lipids, keratin, hair, coloring matter (dyes, pigments or the like), foods, fibers, surfactants, plastic-based packaging materials, microplastics and others. The polluting components included in the water to be treated may be determined depending on the use of the water after treatment or the like. For example, if the water after treatment is used as domestic wastewater, soil, surfactants or the like in the water to be treated may be polluting components.

The concentration of the polluting components in the water to be treated is, for example, 0.1 ppm or more, further 1 ppm or more and further 10 ppm or more, and 100,000 ppm or less, further 10,000 ppm or less and further 5,000 ppm or less. Note that the concentration of the polluting components is expressed in terms of the concentration of total evaporation residues in the water to be treated that is determined in conformance with the measurement of total evaporation residues in JIS K 0102.

The water to be treated to which the present invention is directed may be wastewater discharged from industrial facilities, construction sites, excavation sites, ordinary households or the like, and examples thereof include, for example, wastewater discharged during cleaning processes such as washing of textile products, cleaning of hard articles or the like, and others.

Component (a) is added such that the concentration of component (a) in the water to be treated is, for example, 0.1 ppm or more, further 1 ppm or more and further 2 ppm or more, and 500 ppm or less, further 300 ppm or less, further 100 ppm or less, further 80 ppm or less, further 60 ppm or less and further 50 ppm or less.

Component (b) is added such that the concentration of component (b) in the water to be treated is, for example, 10 ppm or more, further 100 ppm or more and further 500 ppm or more, and 20,000 ppm or less, further 10,000 ppm or less, further 5,000 ppm or less, further 3,000 ppm or less and further 2,000 ppm or less.

Component (c) is added such that the concentration of component (c) in the water to be treated is 100 ppm or more, further 150 ppm or more and further 200 ppm or more, and 100,000 ppm or less, further 10,000 ppm or less, further 5,000 ppm or less, further 2,000 ppm or less, further 1,500 ppm or less and further 1,200 ppm or less. Note that the present invention is also effective on water to be treated containing surfactants, in which case the total of the amount of the surfactants and the amount of component (c) added preferably falls within this range.

In the present invention, component (c) is added in an amount of more than 50 parts by mass, preferably 60 parts by mass or more, more preferably 70 parts by mass or more, further preferably 100 parts by mass or more, furthermore preferably 150 parts by mass or more, furthermore preferably 200 parts by mass or more and furthermore preferably 300 parts by mass or more, and 10,000 parts by mass or less, preferably 2,000 parts by mass or less, more preferably 1,500 parts by mass or less and further preferably 1,200 parts by mass or less relative to 1,000 parts by mass of component (b) from the viewpoints of improved flocculation performance and handling.

When component (c1) is used as component (c) in the present invention, component (c1) is added in an amount of preferably 100 parts by mass or more, more preferably 200 parts by mass or more and further preferably 400 parts by mass or more, and preferably 3,000 parts by mass or less, more preferably 2,000 parts by mass or less and further preferably 1,500 parts by mass or less relative to 1,000 parts by mass of component (b) from the viewpoint of the maximum amount of water that can be treated.

In the present invention, component (a) is added in an amount of preferably 0.1 parts by mass or more, more preferably 1 part by mass or more, further preferably 2 parts by mass or more and furthermore preferably 6 parts by mass or more, and preferably 1,000 parts by mass or less, more preferably 500 parts by mass or less, further preferably 300 parts by mass or less, furthermore preferably 200 parts by mass or less and furthermore preferably 100 parts by mass or less relative to 1,000 parts by mass of component (b) from the viewpoints of improved flocculation performance and handling.

In the present invention, component (c) is added in an amount of preferably 5 parts by mass or more, more preferably 10 parts by mass or more, further preferably 15 parts by mass or more, more preferably 20 parts by mass or more and furthermore preferably 50 parts by mass or more, and preferably 1,000 parts by mass or less, more preferably 500 parts by mass or less, further preferably 200 parts by mass or less, furthermore preferably 150 parts by mass or less and furthermore preferably 120 parts by mass or less relative to 1 part by mass of component (a) from the viewpoints of improved flocculation performance and handling.

When component (c1) is used as component (c) in the present invention, component (c1) is added in an amount of preferably 10 parts by mass or more, more preferably 20 parts by mass or more and further preferably 40 parts by mass or more, and preferably 300 parts by mass or less, more preferably 200 parts by mass or less and further preferably 150 parts by mass or less relative to 1 part by mass of component (a) from the viewpoint of the maximum amount of water that can be treated.

While the order or form in which components (a) and (b) are added to the water to be treated is arbitrary in the present invention, it is preferable that component (b) be added, then component (a), and thereafter component (c) be added.

In the present invention, the water to be treated including components (a), (b) and (c) preferably has a pH of 4 or more and further 5 or more, and 9 or less and further 8.5 or less. In other words, the present invention preferably includes a step of adjusting the pH of the water to be treated to a value falling within the above range. The pH can be adjusted by any of the aforementioned pH adjusters, for example, alkali agents such as caustic soda, sodium carbonate, sodium bicarbonate, sodium silicate, monoethanolamine or the like, and acid agents such as sodium hydrogen sulfate or other inorganic acids, citric acid, lactic acid or other organic acids, or the like.

In the method for purifying water of the present invention, the water treatment agent of the present invention can be used to add components (a), (b) and (c) to the water to be treated.

The following aspects of the present invention are described by way of example. The matters mentioned in the water treatment agent and method for purifying water of the present invention can be appropriately applied to these aspects.
<1> A water treatment agent containing (a) a polymeric flocculating agent [hereinafter referred to as component (a)], (b) an inorganic flocculating agent [hereinafter referred to as component (b)] and (c) a surfactant [hereinafter referred to as component (c)], wherein the water treatment agent contains component (c) in an amount of more than 50 parts by mass and 10,000 parts by mass or less relative to 1,000 parts by mass of component (b).
<2> The water treatment agent according to <1>, wherein the water treatment agent contains component (c) in an amount of more than 50 parts by mass, preferably 60 parts by mass or more, more preferably 70 parts by mass or more, further preferably 100 parts by mass or more, furthermore preferably 150 parts by mass or more, furthermore preferably 200 parts by mass or more and furthermore preferably 300 parts by mass or more, and 10,000 parts by mass or less, preferably 2,000 parts by mass or less, more preferably 1,500 parts by mass or less and further preferably 1,200 parts by mass or less relative to 1,000 parts by mass of component (b).
<3> The water treatment agent according to <1> or <2>, wherein the water treatment agent contains component (c) in an amount of 10 mass% or more.
<4> The water treatment agent according to any of <1> to <3>, wherein the water treatment agent contains component (c) in an amount of 10 mass% or more, further 20 mass% or more and further 30 mass% or more, and 90 mass% or less, further 80 mass% or less and further 60 mass% or less.
<5> The water treatment agent according to any of <1> to <4>, wherein the water treatment agent contains component (c) in an amount of 5 parts by mass or more, preferably 10 parts by mass or more, more preferably 15 parts by mass or more, further preferably 20 parts by mass or more and furthermore preferably 50 parts by mass or more, and 1,000 parts by mass or less, preferably 500 parts by mass or less, more preferably 200 parts by mass or less, further preferably 150 parts by mass or less and furthermore preferably 120 parts by mass or less relative to 1 part by mass of component (a).
<6> The water treatment agent according to any of <1> to <5>, wherein the water treatment agent contains component (a) in an amount of 0.1 parts by mass or more, preferably 1 part by mass or more, more preferably 2 parts by mass or more and further preferably 6 parts by mass or more, and 1,000 parts by mass or less, preferably 500 parts by mass or less, more preferably 300 parts by mass or less, further preferably 200 parts by mass or less and furthermore preferably 100 parts by mass or less relative to 1,000 parts by mass of component (b).
<7> The water treatment agent according to any of <1> to <6>, wherein component (a) has a weight average molecular weight of 500,000 or more, preferably 1,000,000 or more and more preferably 2,000,000 or more, and 15,000,000 or less, preferably 12,000,000 or less and more preferably 10,000,000 or less.
<8> The water treatment agent according to any of <1> to <7>, wherein component (a) is one or more polymeric flocculating agents selected from nonionic polymeric flocculating agents and anionic polymeric flocculating agents, and further a nonionic polymeric flocculating agent.
<9> The water treatment agent according to any of <1> to <8>, wherein component (a) is one or more polymeric flocculating agents selected from polyalkylene oxides, polyacrylamide and polyacrylic acid or salts thereof, further a polyalkylene oxide, and further polyethylene oxide.
<10> The water treatment agent according to any of <1> to <9>, wherein component (a) is a polyalkylene oxide with a weight average molecular weight of 500,000 or more, and further a polyethylene oxide with a weight average molecular weight of 500,000 or more.
<11> The water treatment agent according to any of <1> to <10>, wherein component (a) is a polymeric flocculating agent which exhibits spinnability in the form of an aqueous solution with a concentration of 30 g/L or less, preferably a polymeric flocculating agent which exhibits spinnability in the form of an aqueous solution with a concentration of 10 g/L or less, and more preferably a polymeric flocculating agent which exhibits spinnability in the form of an aqueous solution with a concentration of 5 g/L or less.
<12> The water treatment agent according to any of <1> to <11>, wherein component (a) is a polymeric flocculating agent having spinnability.
<13> The water treatment agent according to any of <1> to <12>, wherein component (b) is one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.
<14> The water treatment agent according to any of <1> to <13>, wherein component (b) is one or more inorganic flocculating agents selected from aluminum sulfate, polyaluminum chloride, iron(II) sulfate, iron(III) sulfate and polyferric sulfate.
<15> The water treatment agent according to any of <1> to <14>, wherein component (c) is one or more surfactants selected from anionic surfactants, nonionic surfactants, cationic surfactants, amphoteric surfactants and water-soluble polymers with a molecular weight of less than 500,000.
<16> The water treatment agent according to any of <1> to <15>, wherein component (c) is an anionic surfactant.
<17> The water treatment agent according to <15> or <16>, wherein the anionic surfactant is one or more anionic surfactants selected from anionic surfactants with a molecular weight of 500 or more and having an aromatic ring, anionic surfactants with a molecular weight of less than 500 and having an aromatic ring, and anionic surfactants having no aromatic rings.
<18> The water treatment agent according to any of <1> to <17>, wherein component (c) is one or more surfactants selected from anionic surfactants with a molecular weight of 500 or more and having an aromatic ring, anionic surfactants with a molecular weight of less than 500 and having an aromatic ring, anionic surfactants having no aromatic rings, nonionic surfactants, cationic surfactants and amphoteric surfactants.
<19> The water treatment agent according to any of <1> to <18>, wherein component (c) is a surfactant selected from compounds with a molecular weight of 500 or more and having an aromatic ring [hereinafter also referred to as component (c1)].
<20> The water treatment agent according to <19>, wherein component (c1) is anionic surfactants with a molecular weight of 500 or more and having an aromatic ring.
<21> The water treatment agent according to <19> or <20>, wherein component (c1) has a molecular weight of 1,000 or more, preferably 1,500 or more and more preferably 2,000 or more, and 100,000 or less, preferably 50,000 or less and more preferably 20,000 or less.
<22> The water treatment agent according to any of <19> to <21>, wherein component (c1) is compounds having 1 or more, further 5 or more and further 10 or more, and 1,000 or less, further 500 or less and further 200 or less aromatic rings.
<23> The water treatment agent according to any of <19> to <22>, wherein component (c1) is one or more compounds selected from naphthalene sulfonate formaldehyde condensates or salts thereof, alkyl diphenyl ether disulfonates or salts thereof, and alkylbenzene sulfonates or salts thereof.
<24> The water treatment agent according to <23>, wherein the salts of the compounds are alkali metal salts or alkaline earth metal salts, further alkali metal salts, and further sodium salts or potassium salts.
<25> The water treatment agent according to any of <19> to <24>, wherein the water treatment agent contains component (c1) as component (c), and contains component (c1) in an amount of 100 parts by mass or more, preferably 200 parts by mass or more and more preferably 400 parts by mass or more, and 3,000 parts by mass or less, preferably 2,000 parts by mass or less and more preferably 1,500 parts by mass or less relative to 1,000 parts by mass of component (b).
<26> The water treatment agent according to any of <19> to <25>, wherein the water treatment agent contains component (c1) as component (c), and contains component (c1) in an amount of 10 parts by mass or more, preferably 20 parts by mass or more and more preferably 40 parts by mass or more, and 300 parts by mass or less, preferably 200 parts by mass or less and more preferably 150 parts by mass or less relative to 1 part by mass of component (a) .
<27> The water treatment agent according to any of <1> to <26>, wherein the water treatment agent is of a multi-agent type composed of a combination of agents including components selected from components (a), (b) and (c), wherein components (a) and (b) are formulated in different agents.
<28> A method for purifying water including, adding (a) a polymeric flocculating agent [hereinafter referred to as component (a)], (b) an inorganic flocculating agent [hereinafter referred to as component (b)] and (c) a surfactant [hereinafter referred to as component (c)] to water to be treated including water and polluting components,
   wherein component (c) is added such that a concentration of component (c) in the water to be treated is 100 ppm or more and 100,000 ppm or less, and
   component (c) is added in an amount of more than 50 parts by mass and 10,000 parts by mass or less relative to 1,000 parts by mass of component (b).
<29> The method for purifying water according to <28>, wherein component (a) is added such that a concentration of component (a) in the water to be treated is 0.1 ppm or more, further 1 ppm or more and further 2 ppm or more, and 500 ppm or less, further 300 ppm or less, further 100 ppm or less, further 80 ppm or less, further 60 ppm or less and further 50 ppm or less.
<30> The method for purifying water according to <28> or <29>, wherein component (b) is added such that a concentration of component (b) in the water to be treated is 10 ppm or more, further 100 ppm or more and further 500 ppm or more, and 20,000 ppm or less, further 10,000 ppm or less, further 5,000 ppm or less, further 3,000 ppm or less and further 2,000 ppm or less.
<31> The method for purifying water according to any of <28> to <30>, wherein component (c) is added such that a concentration of component (c) in the water to be treated is 100 ppm or more, further 150 ppm or more and further 200 ppm or more, and 100,000 ppm or less, further 10,000 ppm or less, further 5,000 ppm or less, further 2,000 ppm or less, further 1,500 ppm or less and further 1,200 ppm or less.
<32> The method for purifying water according to any of <28> to <31>, wherein a concentration of the polluting components in the water to be treated is 0.1 ppm or more, further 1 ppm or more and further 10 ppm or more, and 100,000 ppm or less, further 10,000 ppm or less and further 5,000 ppm or less.
<33> The method for purifying water according to any of <28> to <32>, wherein component (c) is added in an amount of more than 50 parts by mass, preferably 60 parts by mass or more, more preferably 70 parts by mass or more, further preferably 100 parts by mass or more, furthermore preferably 150 parts by mass or more, furthermore preferably 200 parts by mass or more and furthermore preferably 300 parts by mass or more, and 10,000 parts by mass or less, preferably 2,000 parts by mass or less, more preferably 1,500 parts by mass or less and further preferably 1,200 parts by mass or less relative to 1,000 parts by mass of component (b).
<34> The method for purifying water according to any of <28> to <33>, wherein component (a) is added in an amount of 0.1 parts by mass or more, preferably 1 part by mass or more, more preferably 2 parts by mass or more and further preferably 6 parts by mass or more, and 1,000 parts by mass or less, preferably 500 parts by mass or less, more preferably 300 parts by mass or less, further preferably 200 parts by mass or less and furthermore preferably 100 parts by mass or less relative to 1,000 parts by mass of component (b).
<35> The method for purifying water according to any of <28> to <34>, wherein component (c) is added in an amount of 5 parts by mass or more, preferably 10 parts by mass or more, more preferably 15 parts by mass or more, further preferably 20 parts by mass or more and furthermore preferably 50 parts by mass or more, and 1,000 parts by mass or less, preferably 500 parts by mass or less, more preferably 200 parts by mass or less, further preferably 150 parts by mass or less and furthermore preferably 120 parts by mass or less relative to 1 part by mass of component (a).
<36> The method for purifying water according to any of <28> to <35>, wherein a compound with a molecular weight of 500 or more and having an aromatic ring [hereinafter also referred to as component (c1)], or further, an anionic surfactant with a molecular weight of 500 or more and having an aromatic ring is used as component (c), and component (c1) is added in an amount of 100 parts by mass or more, preferably 200 parts by mass or more and more preferably 400 parts by mass or more, and 3,000 parts by mass or less, preferably 2,000 parts by mass or less and more preferably 1,500 parts by mass or less relative to 1,000 parts by mass of component (b).
<37> The method for purifying water according to any of <28> to <36>, wherein a compound with a molecular weight of 500 or more and having an aromatic ring [hereinafter also referred to as component (c1)], or further, an anionic surfactant with a molecular weight of 500 or more and having an aromatic ring is used as component (c), and component (c1) is added in an amount of 10 parts by mass or more, preferably 20 parts by mass or more and more preferably 40 parts by mass or more, and 300 parts by mass or less, preferably 200 parts by mass or less and more preferably 150 parts by mass or less relative to 1 part by mass of component (a).
<38> The method for purifying water according to any of <28> to <37>, wherein the water to be treated including components (a), (b) and (c) has a pH of 4 or more and further 5 or more, and 9 or less and further 8.5 or less.
<39> The method for purifying water according to any of <28> to <38>, wherein the water treatment agent according to any of <28> to <36> is used to add components (a), (b) and (c).

### Examples

### [Examples 1 and 2 and comparative example 1]

### (1) Method for preparing polluted water

A 500-ml glass beaker was filled with 475 g of ion exchange water. A cylindrical stirrer with a diameter of 11 mm and a length of 43 mm was placed therein, and the water was stirred for 1 minute on a magnetic stirrer (NISSIN stirrer SW-M120) with the scale set to 4. 0.5 g of soil (Kanuma soil which was ground in a mixer of Hosokawa Micron Co., Ltd.) was added and stirred for 30 seconds to prepare polluted water, or water to be treated.

### (2) Evaluation

With the prepared polluted water used as water to be treated, polluted water for evaluation was obtained by adding each component thereto in the following manner, and the flocculation of polluting components was evaluated.

While the polluted water was stirred on the magnetic stirrer (NISSIN stirrer SW-M120) with the scale set to 4, component (b) was added such that the concentration in the polluted water for evaluation was a value shown in Table 1 or 2, and 30 seconds later, sodium hydroxide was added to adjust the pH to 7. Further 30 seconds later, an aqueous solution prepared in advance from ion exchange water to contain components (a) and (c) in concentrations of 1,000 ppm and 50,000 ppm, respectively, was added such that each of the concentrations of the above components in the polluted water for evaluation was a value shown in Table 1 or 2, and ion exchange water was finally added such that the total liquid volume was 500 g and stirred for 300 seconds in total to obtain the polluted water for evaluation. After stirring, it was left for 5 minutes in a room conditioned at an air temperature of 25°C, and flocculates were observed with a microscope (manufactured by KEYENCE CORPORATION) to analyze the particle sizes of the flocculates. The particle sizes of 10 flocculates arbitrarily selected were analyzed and the average value thereof was used as the particle size of them. The results are shown in Tables 1 and 2. In the tables, (c)/[1,000 parts of (b)] is the mass ratio of component (c) relative to 1,000 parts by mass of component (b).

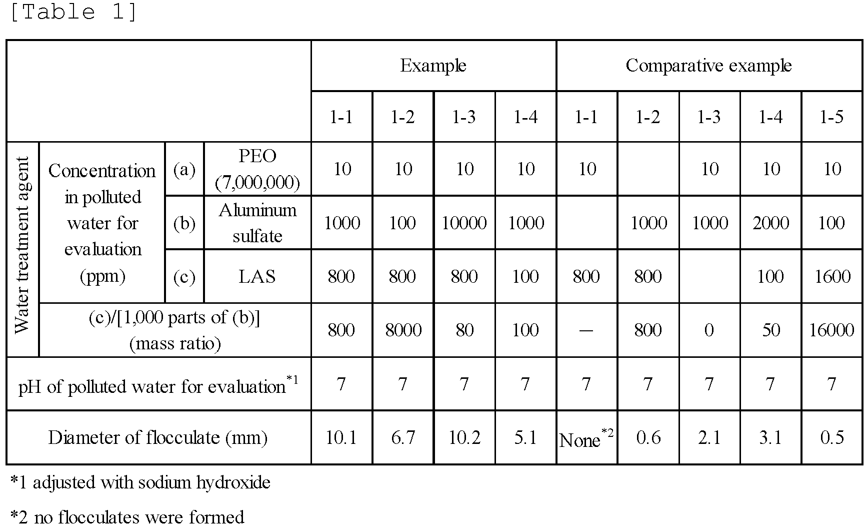

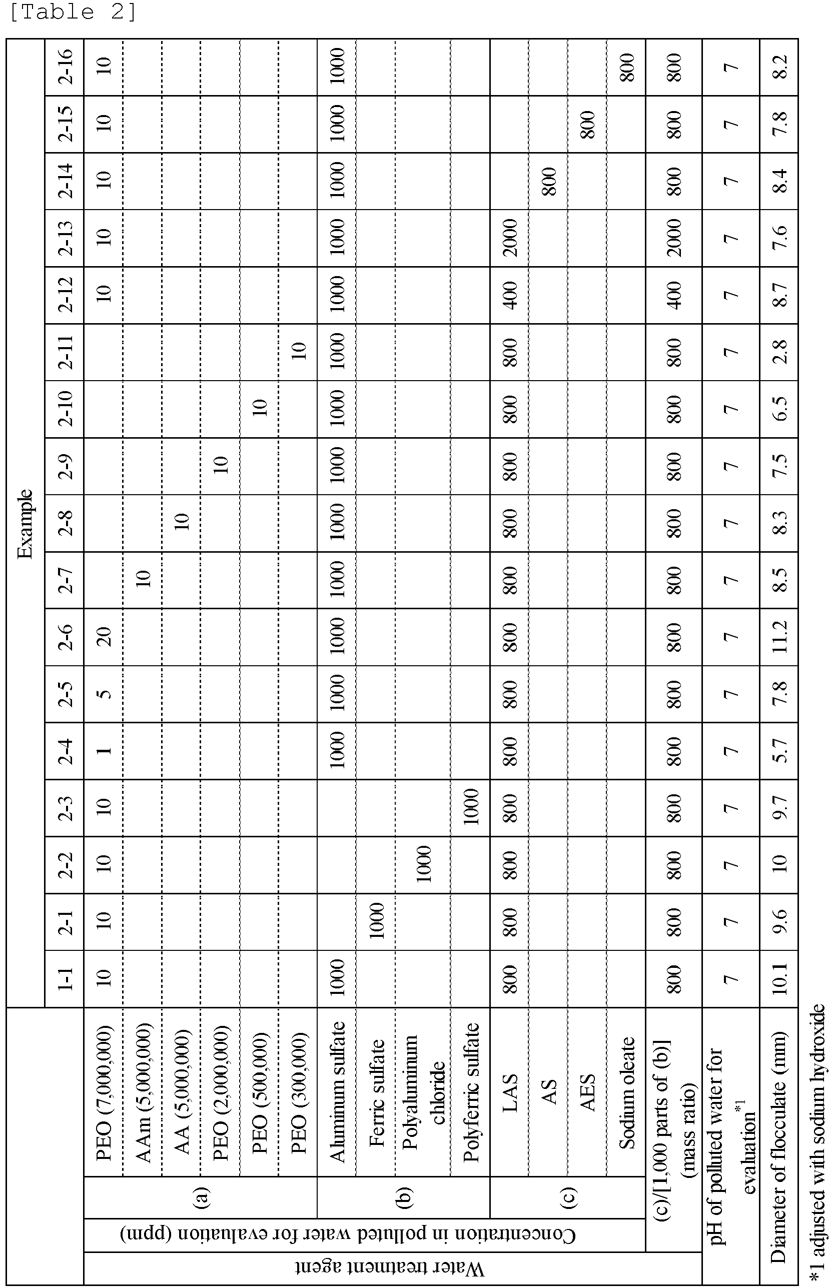

It is understood from Tables 1 and 2 that components (a) to (c) combined under predetermined conditions of the present invention can form enlarged flocculates.

The components in the tables are the following. The numerals shown in parentheses for component (a) are weight average molecular weights.

### Component (a)

- PEO (7,000,000): polyethylene oxide, PEO-27, Sumitomo Seika Chemicals Company, Limited, spinnability
- AAm (5,000,000): polyacrylamide, FUJIFILM Wako Pure Chemical Corporation, spinnability
- AA (5,000,000): sodium polyacrylate, AP199, Mitsubishi Chemical Corporation, spinnability
- PEO (2,000,000): Polyethylene Glycol 2,000,000, FUJIFILM Wako Pure Chemical Corporation, spinnability
- PEO (500,000): polyethylene oxide, PEO-2, Sumitomo Seika Chemicals Company, Limited, spinnability
- PEO (300,000): polyethylene oxide, PEO-1, Sumitomo Seika Chemicals Company, Limited, no spinnability

### Component (b)

- Aluminum sulfate: aluminum sulfate (anhydrous), TAIMEI CHEMICALS CO., LTD.
- Ferric sulfate: iron(III) sulfate (anhydrous), FUJIFILM Wako Pure Chemical Corporation
- Polyaluminum chloride: polyaluminum chloride, TAIMEI CHEMICALS CO., LTD.
- Polyferric sulfate: polyferric sulfate, TAIKI CHEMICAL INDUSTRIES CO., LTD.

### Component (c)

- LAS: sodium lauryl benzene sulfonate, NEOPELEX G-15 (manufactured by Kao Corporation)
- AS: sodium lauryl sulfate, EMAL 10G (manufactured by Kao Corporation)
- AES: sodium polyoxyethylene lauryl ether sulfate, EMAL 270J (manufactured by Kao Corporation)
- Fatty acid: sodium oleate: FUJIFILM Wako Pure Chemical Corporation

### pH adjuster

- Sodium hydroxide: FUJIFILM Wako Pure Chemical Corporation

### [Example 3]

### <Experimental method>

### (1) Method for preparing polluted water

Plastic containers (1 to 50 L in capacity) were filled respectively with 1 to 50 L of ion exchange water depending on their capacities. The following powder detergent as a detergent component and the following mud as a polluting component were added in concentrations of 1333 ppm and 1000 ppm, respectively. An arm was put into the water until the fingers touched the bottom of the container, and the water was stirred round 10 times in the same direction.
Powder detergent: Sunlight Oxifresh (Unilever)
Mud: ground Kanuma soil (commercially available Kanuma red soil ground with the impact screen micro pulverizer AP-1 (manufactured by Hosokawa Micron Co., Ltd.))

### (2) Evaluation

### (2-1) Maximum amount of water that can be treated

The prepared polluted water was used as water to be treated to evaluate a water purification effect. The arm was put into the polluted water the temperature of which was adjusted to 30°C until the fingers touched the bottom of the container, and while the polluted water was stirred round in the same direction at a rate of 50 times per minute, component (b) was added thereto such that the concentration was a value shown in Table 3, and 30 seconds later, sodium carbonate was added to adjust the pH to 7. Further 30 seconds later, component (a) was added such that the concentration was a value shown in Table 3. Further 30 seconds later, component (c) was added such that the concentration in the polluted water for evaluation was a value shown in Table 3, and stirred for 5 minutes in total at the above rate. After stirring, it was left for 5 minutes in a room conditioned at an air temperature of 25°C, and flocculates were removed therefrom by hand. This evaluation was started with an amount of water of 1 L, and if flocculates could be formed and removed, the amount of water was increased to 5 L, and the amount of water was thereafter increased in 5 L increments up to 50 L to confirm the maximum amount of water at which flocculates could be formed and removed. The results are shown in Table 3. Note that this evaluation was performed up to an amount of water of 50 L, but there is a possibility that the water treatment agents for which the maximum amount of water that can be treated is indicated as 50 L in the table are capable of treating water in an amount of more than 50 L.

The components in the table are the following. The numerals shown in parentheses for component (a) are weight average molecular weights.

### Component (a)

- PEO (7,000,000): polyethylene oxide, PEO-27, Sumitomo Seika Chemicals Company, Limited, spinnability
- AAm (5,000,000): polyacrylamide, FUJIFILM Wako Pure Chemical Corporation, spinnability
- AA (5,000,000): sodium polyacrylate, AP199, Mitsubishi Chemical Corporation, spinnability
- PEO (2,000,000): Polyethylene Glycol 2,000,000, FUJIFILM Wako Pure Chemical Corporation, spinnability
- PEO (500,000): polyethylene oxide, PEO-2, Sumitomo Seika Chemicals Company, Limited, spinnability

### Component (b)

- Aluminum sulfate: aluminum sulfate (anhydrous), TAIMEI CHEMICALS CO., LTD.
- Ferric sulfate: iron(III) sulfate (anhydrous), FUJIFILM Wako Pure Chemical Corporation
- Polyaluminum chloride: polyaluminum chloride, TAIMEI CHEMICALS CO., LTD.
- Polyferric sulfate: polyferric sulfate, TAIKI CHEMICAL INDUSTRIES CO., LTD.

### Component (c)

- c-1: DEMOL N (sodium β-naphthalene sulfonate formaldehyde condensates, weight average molecular weight 4,600), Kao Corporation
- c-2: MIGHTY 150 (sodium β-naphthalene sulfonate formaldehyde condensates, weight average molecular weight 14,000), Kao Corporation
- c-3: PELEX SS-L (sodium alkyl diphenyl ether disulfonate, weight average molecular weight 550), Kao Corporation
- LAS: NEOPELEX G-15 (sodium lauryl benzene sulfonate, molecular weight 348), Kao Corporation
- AS: EMAL 10G (sodium lauryl sulfate), Kao Corporation
- AA (10,000): Sodium polyacrylate, weight average molecular weight 10,000, FUJIFILM Wako Pure Chemicals Corporation

### (2-2) Suppression of foaming of treated water

In the test of (2-1), the foam height of supernatant when the amount of water was 1 L was measured by the Ross-miles method, and the suppression of foaming was evaluated on the basis of the following criteria. The results are shown in Table 3.
A: foam height was 50 mm or less at 5 minutes after the start of measurement
B: foam height was more than 50 mm and 100 mm or less at 5 minutes after the start of measurement
C: foam height was more than 100 mm at 5 minutes after the start of measurement

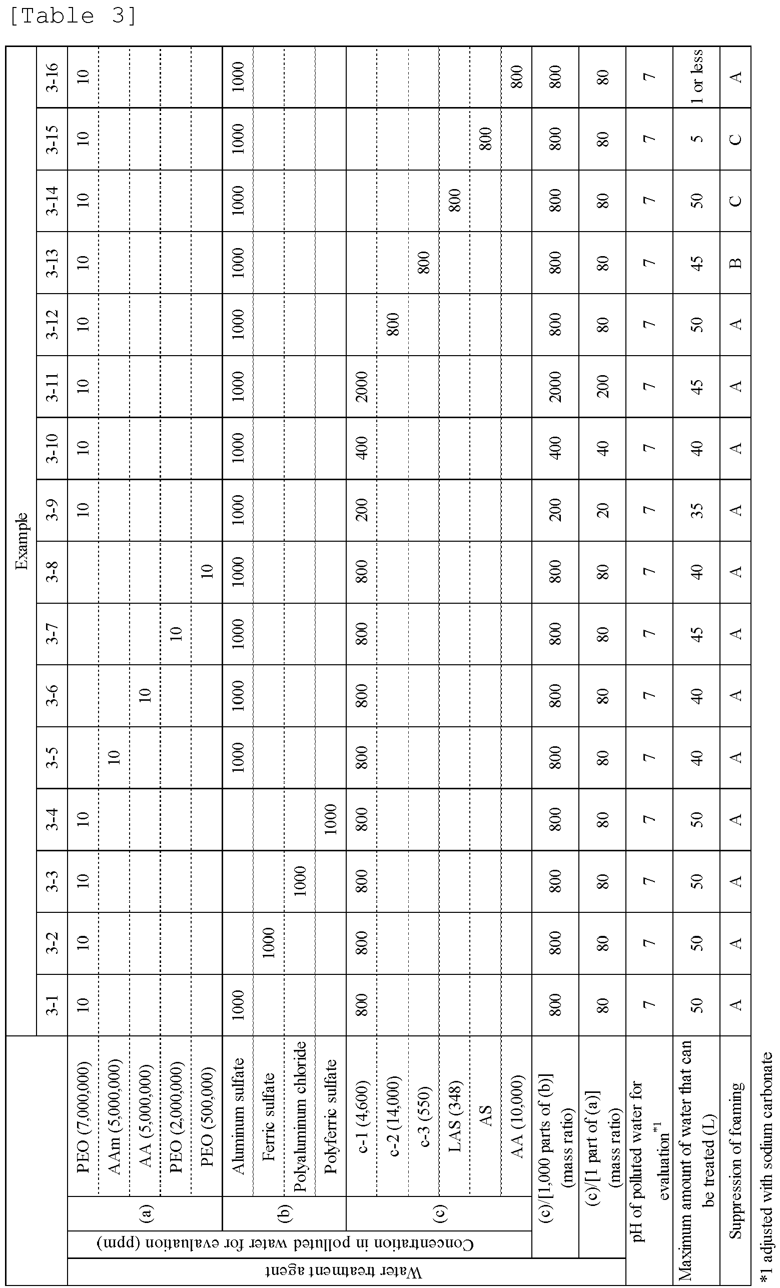

In the table, (c)/[1,000 parts of (b)] is the mass ratio of component (c) relative to 1,000 parts by mass of component (b).

Further, in the table, (c)/[1 part of (a)] is the mass ratio of component (c) relative to 1 part by mass of component (a).

Further, in the table, the numerals shown in parentheses for component (c) are weight average molecular weights.

According to the evaluation method in examples 1 and 2, flocculates formed in examples 3-1 to 3-16 had flocculate diameters equal to or greater than those formed in examples 1 and 2 had. Note that the maximum amount of water that can be treated in example 3-16 is indicated as "1 or less" in the table because it was confirmed by the evaluation method in the present example that flocculates were formed when the amount of water was 1 L, but they were small in particle size and difficult to remove. Further, in example 3-16, the suppression of foaming was tested by so carefully collecting supernatant with a dropper as not to produce a flow of water.

## Claims

1. A water treatment agent comprising (a) a polymeric flocculating agent [hereinafter referred to as component (a)], (b) an inorganic flocculating agent [hereinafter referred to as component (b)] and (c) a surfactant [hereinafter referred to as component (c)], wherein the water treatment agent comprises the component (c) in an amount of more than 50 parts by mass and 10,000 parts by mass or less relative to 1,000 parts by mass of the component (b).

2. The water treatment agent according to claim 1, wherein the water treatment agent comprises the component (c) in an amount of 10 mass% or more.

3. The water treatment agent according to claim 1 or 2, wherein the water treatment agent comprises the component (c) in an amount of 5 parts by mass or more and 1,000 parts by mass or less relative to 1 part by mass of the component (a).

4. The water treatment agent according to any one of claims 1 to 3, wherein the water treatment agent comprises the component (a) in an amount of 0.1 parts by mass or more and 1,000 parts by mass or less relative to 1,000 parts by mass of the component (b).

5. The water treatment agent according to any one of claims 1 to 4, wherein the component (a) is a polymeric flocculating agent having spinnability.

6. The water treatment agent according to any one of claims 1 to 5, wherein the component (b) is one or more inorganic flocculating agents selected from aluminum sulfate, sodium aluminate, polyaluminum chloride, aluminum oxide, aluminum hydroxide, iron(II) sulfate, iron(III) chloride, iron(III) sulfate, polyferric sulfate, sodium silicate, sodium sulfite and an aluminum alum.

7. The water treatment agent according to any one of claims 1 to 6, wherein the component (c) is an anionic surfactant.

8. The water treatment agent according to any one of claims 1 to 7, wherein the component (c) is a surfactant selected from compounds with a molecular weight of 500 or more and having an aromatic ring.

9. The water treatment agent according to any one of claims 1 to 8, wherein the water treatment agent is of a multi-agent type consisting of a combination of agents comprising components selected from the components (a), (b) and (c), wherein the components (a) and (b) are formulated in different agents.

10. A method for purifying water comprising, adding (a) a polymeric flocculating agent [hereinafter referred to as component (a)], (b) an inorganic flocculating agent [hereinafter referred to as component (b)] and (c) a surfactant [hereinafter referred to as component (c)] to water to be treated comprising water and polluting components,
wherein the component (c) is added such that a concentration of the component (c) in the water to be treated is 100 ppm or more and 100,000 ppm or less, and
the component (c) is added in an amount of more than 50 parts by mass and 10,000 parts by mass or less relative to 1,000 parts by mass of the component (b).

11. The method for purifying water according to claim 10, wherein the component (a) is added such that a concentration of the component (a) in the water to be treated is 0.1 ppm or more and 500 ppm or less.

12. The method for purifying water according to claim 10 or 11, wherein the component (b) is added such that a concentration of the component (b) in the water to be treated is 10 ppm or more and 20,000 ppm or less.

13. The method for purifying water according to any one of claims 10 to 12, wherein the water treatment agent according to any one of claims 1 to 9 is used to add the components (a), (b) and (c).
